# EUROPEAN PATENT APPLICATION

(11) **EP 4 803 738 A1**
(43) Date of publication of application: **09.09.2026**
(21) Application number: 24884934.1
(22) Date of filing: 31.10.2024
(51) Int. Cl.: F03D 7/02

(54) **VARIABLE PITCH SYSTEM, WIND TURBINE GENERATOR SET, AND WIND FIELD**

(30) Priority: 31.10.2023 CN 202311442307
(71) Applicant: GOLDWIND SCIENCE & TECHNOLOGY CO., LTD., Xinjiang 830026 (CN)
(72) Inventor: CUI, Chao, Beijing 100176 (CN)
(74) Representative: Gulde & Partner
(86) International application number: PCT/CN2024/129097
(87) International publication number: WO 2025/092936

(57) **Abstract**

A variable pitch system, a wind turbine, and a wind field. The variable pitch system comprises: a variable pitch cylinder (118), provided with a rod cavity, a rodless cavity and a piston rod; a pitch control unit (1), arranged between an oil source and the variable pitch cylinder (118), wherein the pitch control unit (1) is separately communicated with the rod cavity and the rodless cavity, so that by switching the flow directions of the oil inlet and outlet paths of the rod cavity and the rodless cavity, the piston rod of the variable pitch cylinder (118) stretches out or retracts so as to perform pitch adjustment on blades; and a pitch angle holding unit (2) connected between one of the rod cavity and the rodless cavity, and the oil source, wherein the pitch angle holding unit (2) can supply oil for said one of the rod cavity and the rodless cavity and close the oil supply and return path of the other of the rod cavity and the rodless cavity, so that the piston rod keeps still, so as to keep the blades at a predetermined pitch angle. By means of a hydraulic system, the blades of a wind turbine are locked at a predetermined angle, so that the wind turbine can also keep the blades at a predetermined pitch angle in a power-off state.

## Description

The present application claims the priority to the Chinese Patent Applications No. 202311442307.2 filed on October 31, 2023, which is incorporated herein by reference in its entirety.

### FIELD

The present application relates to the technical field of wind power generation and, in particular, to a pitch system, a wind turbine, and a wind farm.

### BACKGROUND

Fluid (wind) flowing over a surface of a slender cylinder (for example, a tower) may cause pairs of anti-symmetric vortices downstream due to the instability of a boundary layer. The generation and shedding of vortices are directly related to a periodic change of excitation on the surface of the tower. If an excitation frequency (fs) is close to a natural frequency (f) of the tower, vibration of the tower is amplified. Additionally, the vibration in turn affects a flow field and intensifies the excitation, resulting in large-amplitude vibration. Such a fluid-structure interaction phenomenon is referred to as vortex-induced vibration.

Before a wind turbine starts generating power after being erected, or when it is shut down for maintenance, it is necessary to maintain the blades at a predetermined pitch angle to protect the wind turbine against vortex-induced vibration. The current method for suppressing vortex-induced vibration mainly relies on an electrically controlled pitch system, where a pitch motor is controlled to adjust and lock the blades at a target pitch angle. However, prior to power generation after erection, or during shutdown for maintenance, the entire wind turbine may be in a complete power-off state, making it impossible to continuously supply power to keep the blades at the anti-vortex angle. Even if power may be supplied by batteries or the like, the electrical energy stored in the batteries cannot meet the demand for locking the blades at a fixed angle for an extended period when the wind turbine remains in a power-off state for a long time.

### SUMMARY

An object of the present application is to provide a pitch system, a wind turbine, and a wind farm that utilize a hydraulic system to lock blades of the wind turbine at a predetermined angle, enabling the blades to be maintained at the predetermined pitch angle even when the wind turbine is in a power-off state.

In an aspect of the present application, a pitch system is provided, which includes a pitch cylinder, a pitch control unit, and a pitch angle holding unit. The pitch cylinder is provided with a rod cavity, a rodless cavity, and a piston rod. The pitch control unit is arranged between an oil source and the pitch cylinder, and is in communication with both the rod cavity and the rodless cavity so as to extend or retract the piston rod of the pitch cylinder for blade pitch adjustment by switching the directions of the oil flow into or from the rod cavity and the rodless cavities. The pitch angle holding unit is connected between the oil source and one of the rod cavity and the rodless cavity. The pitch angle holding unit is configured to supply oil to the one of the rod cavity and the rodless cavity and to close the oil supply and return line of the other of the rod cavity and the rodless cavity, thereby keeping the piston rod stationary to maintain the blades at a predetermined pitch angle.

In another aspect of the present application, a wind turbine is provided, which includes the aforementioned pitch system.

In yet another aspect of the present application, a wind farm is provided, which includes the aforementioned wind turbine.

It should be understood that the above summary description and the following detailed description are only illustrative and explanatory and do not limit the present application.

### BRIEF DESCRIPTION OF THE DRAWINGS

The accompanying drawings are incorporated in the specification and form a part of the specification, illustrating some embodiments of the present application. The accompanying drawings are provided for explaining the principles of the present application together with the specification, rather than constituting an improper limitation of the present application.
FIG. 1 is a schematic diagram showing principle of a pitch system provided according to an exemplary embodiment of the present application.
FIG. 2 is a schematic diagram showing flow of hydraulic oil when a pitch angle holding unit in FIG. 1 is in operation.
FIG. 3 is a schematic diagram showing flow of the hydraulic oil when the pitch angle holding unit in FIG. 1 is accumulating energy.
FIG. 4 is a schematic diagram showing flow of the hydraulic oil when the pitch angle holding unit in FIG. 1 is releasing energy.
FIG. 5 is a schematic diagram showing flow of the hydraulic oil during an emergency feathering action of a pitch control unit in FIG. 1.
FIG. 6 is a schematic diagram showing flow of the hydraulic oil during a normal-rate feathering action of the pitch control unit in FIG. 1.
FIG. 7 is a schematic diagram showing flow of the hydraulic oil during a normal-rate unfeathering action of the pitch control unit in FIG. 1.
FIG. 8 is a schematic diagram showing a flow direction of hydraulic oil during a variable-rate feathering action of the pitch control unit in FIG. 1.

**Description of Reference Numerals:**

| | | | |
|---|---|---|---|
| 1 | pitch control unit; | 2 | pitch angle holding unit; |
| 3 | blade; | 4 | emergency feathering oil supply line; |
| 5 | normal pitching oil supply and return line; | 118 | pitch cylinder; |
| 106 | actuation unit; | 110 | first directional control valve; |
| 131 | second directional control valve; | 132 | third directional control valve; |
| 117 | fourth directional control valve; | 116 | fifth directional control valve; |
| 115 | sixth directional control valve; | 133 | seventh directional control valve; |
| 123 | eighth directional control valve; | 112 | directional valve; |
| 114 | relief valve; | 134 | first check valve; |
| 121 | second check valve; | 125 | first ball valve; |
| 126 | second ball valve; | 103 | pressure sensor. |

### DETAILED DESCRIPTION OF THE EMBODIMENTS

Exemplary embodiments are now described more comprehensively with reference to the accompanying drawings. However, it should not be understood that the embodiments of the present application are limited to those described herein. The same reference numerals in the drawings denote the same or similar structures, and thus their detailed descriptions will be omitted.

A pitch system for a wind turbine is provided according to the present application.

According to an embodiment of the present application, the pitch system includes a pitch angle holding unit, in addition to a normal pitch control unit. When the pitch control unit is in a power-off state and cannot perform a blade locking function in an anti-vortex state, the pitch angle holding unit locks blades at a predetermined pitch angle, enabling the wind turbine to resist vortex-induced vibration.

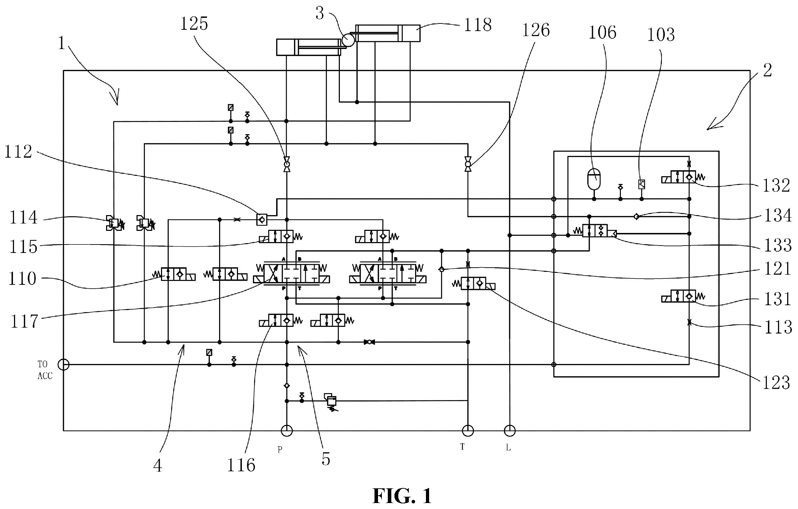

FIG. 1 is a schematic diagram showing principle of a pitch system provided according to an exemplary embodiment of the present application. Referring to FIG. 1, the pitch system includes a pitch cylinder 118, a pitch control unit 1, and a pitch angle holding unit 2. The pitch cylinder 118 has a piston rod connected to blades 3 of the wind turbine and configured to drive the blades 3 to perform pitch adjustment. The pitch control unit 1 is used to control the operation of the pitch cylinder 118 to enable normal pitch adjustment during grid-connected operation of the wind turbine. The pitch angle holding unit 2 is used to lock the blades at a predetermined pitch angle by controlling the oil supply and return lines of the pitch control unit 1 when the wind turbine is in a power-off state.

For example, when the wind turbine has been installed but has not yet connected to the grid and started generating electricity, a ground power supply system may be used to supply power to the pitch control unit 1. The pitch control unit 1 drives the pitch cylinder 118 to pitch the blades to a predetermined angle, and then the pitch angle holding unit 2 is activated to lock the blades. For example, but not limited to, when the pitch angle holding unit 2 is operated in an anti-vortex operating condition, it can maintain the blades 3 at an optimal anti-vortex pitch angle position, where the wind turbine can resist vortex-induced vibration. As another example, during grid-connected power generation, if the wind turbine needs to be shut down for maintenance, its own electrical energy may be used to drive the pitch cylinder 118 by the pitch control unit 1 to pitch the blades to a predetermined angle, and then the pitch angle holding unit 2 is activated to lock the blades. The pitch system will be described below in detail with reference to FIG. 1.

As shown in FIG. 1, the pitch cylinder 118 is provided with a piston and a piston rod connected to the piston, dividing an inner cavity of the pitch cylinder 118 into a rod cavity and a rodless cavity. The piston rod is located in the rod cavity, with one end extending out of the rod cavity and connected to the blades 3. The extension or retraction of the piston rod drives the blades to rotate by a predetermined angle. For the convenience of description in the following embodiments and claims, an operation in which the piston rod is extended to perform the blade feathering operation (or pitch-to-feather) and the piston rod is retracted to perform the blade unfeathering operation (or pitch-to-run) is described or defined as an example. However, the pitch adjustment operation is not limited to this. It may also be possible that the piston rod is extended to perform the blade unfeathering operation and the piston rod is retracted to perform the blade feathering operation. These are routine modifications that are readily understandable to those skilled in the art and are not intended to limit the protection scope of the present application.

The pitch system includes a pitch cylinder 118, a pitch control unit 1, and a pitch angle holding unit 2. The pitch cylinder 118 is configured to drive the blades 3 of the wind turbine to perform pitch adjustment. The pitch control unit 1 is arranged between the oil source and the pitch cylinder 118 and is in communication with both the rod cavity and the rodless cavity so as to extend or retract the piston rod of the pitch cylinder 118 for blade pitch adjustment by changing the flow directions of the oil into or from the rod cavity and the rodless cavity. The pitch angle holding unit 2 is connected between the oil source and one of the rod cavity and the rodless cavity. The pitch angle holding unit 2 may supply oil to the one of the rod cavity and the rodless cavity connected therewith and close the oil supply and return line of the other one of the rod cavity and the rodless cavity, keeping the piston rod stationary and maintaining the blades at a predetermined pitch angle. For example, but not limited to, the predetermined pitch angle refers to an anti-vortex angle.

Referring to the figures, as an example, the pitch angle holding unit 2 in this embodiment is in communication with the rod cavity of the pitch cylinder 118 to supply oil to the rod cavity, and can close the oil supply and return line of the rodless cavity, which will be described below for illustrative purpose but is not limited thereto.

To supply oil to and discharge oil from the pitch cylinder 118, the rod cavity of the pitch cylinder 118 is provided with a first oil port that may be in communication with the oil source to serve as an oil inlet for supplying hydraulic oil into the rod cavity or as an oil outlet for discharging hydraulic oil from the rod cavity through this first oil port. The rodless cavity is provided with a second oil port that may be in communication with the oil source to serve as an oil inlet for supplying hydraulic oil into the rodless cavity or as an oil outlet for discharging hydraulic oil from the rodless cavity through this second oil port.

It can be understood that, when the first oil port serves as an oil inlet, the second oil port serves as an oil outlet, or when the first oil port serves as an oil outlet, the second oil port serves as an oil inlet.

In this embodiment, hydraulic oil is supplied into or discharged from the pitch cylinder 118 through the first and second oil ports, creating a pressure differential between the rod cavity and the rodless cavity which are located on both sides of the piston. The pressure differential drives the piston and piston rod to move, causing the piston rod to extend or retract relative to a cylinder body. The piston rod serves as an actuator to transmit the motion to the blades for pitch adjustment. When the wind turbine is normally generating electricity, its own power supply may also be used to switch the solenoid valves in the pitch control unit 1. By performing hydraulic control on the pitch cylinder 118, the blades can be locked at a predetermined angle.

The pitch control unit is provided between the pitch cylinder 118 and the oil source to pitch the blades to run or feather.

In the pitch system provided according to the present application, the pitch angle holding unit 2 is connected between the rod cavity and the oil source, more specifically, connected to the oil supply and return line of the rod cavity. When the wind turbine is operating normally, the pitch angle holding unit 2 is not activated, and the aforementioned oil supply and return line of the rod cavity can be communicated, which is controlled by the valves connected to the oil supply and return line of the rod cavity. Thus, the pitch angle holding unit 2 is prevented from affecting the normal pitch adjustment operation of the pitch system. When the wind turbine is not connected to the grid or is shut down for maintenance, if there is a need to resist vortex-induced vibration, the pitch angle holding unit 2 is activated.

When the pitch angle holding unit 2 is activated, it can supply hydraulic oil to the rod cavity and close the oil supply and return line of the rodless cavity, preventing hydraulic oil from entering or exiting the rodless cavity. This ensures that no hydraulic oil enters both the rodless cavity and the rod cavity of the pitch cylinder, so as to maintain the pressure in both the rod cavity and the rodless cavity and keep the piston rod at a predetermined position relative to the cylinder body, preventing the blades from undergoing a pitching rotation.

Continuing with reference to FIG. 1, the oil supply and return line for the rodless cavity includes an emergency feathering oil supply line 4 and a normal pitching oil supply and return line 5 connected in parallel between the rodless cavity and the oil source. When the pitch angle holding unit 2 is activated, the normal pitching oil supply and return line 5 is closed, and the pitch angle holding unit 2 may close the emergency feathering oil supply line 4.

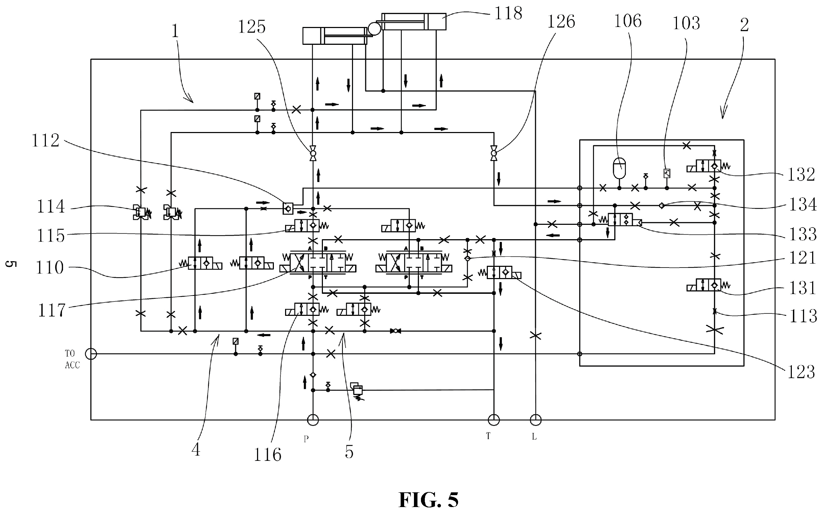

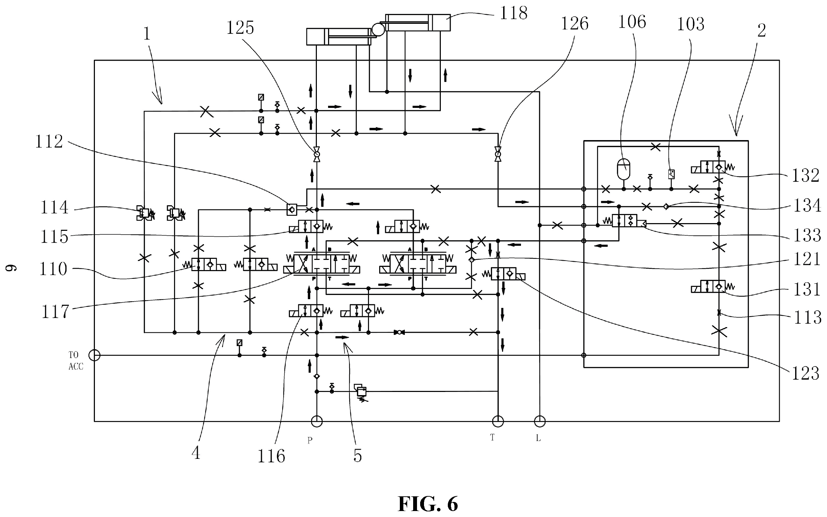

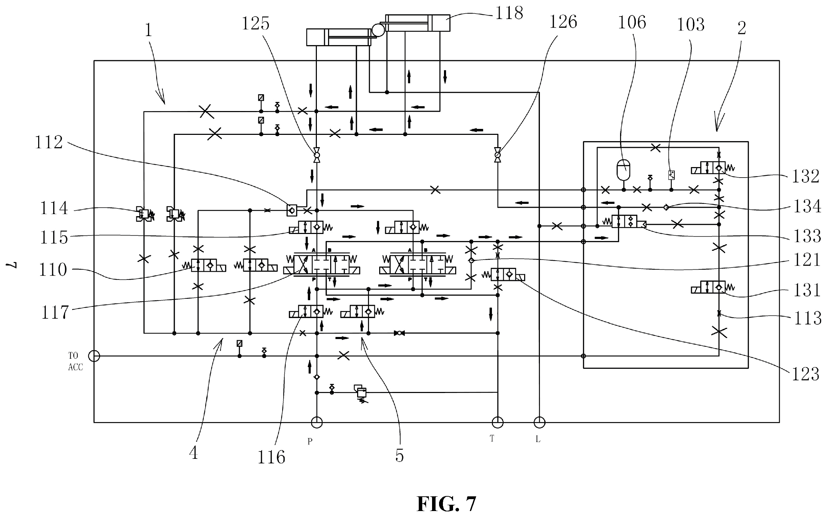

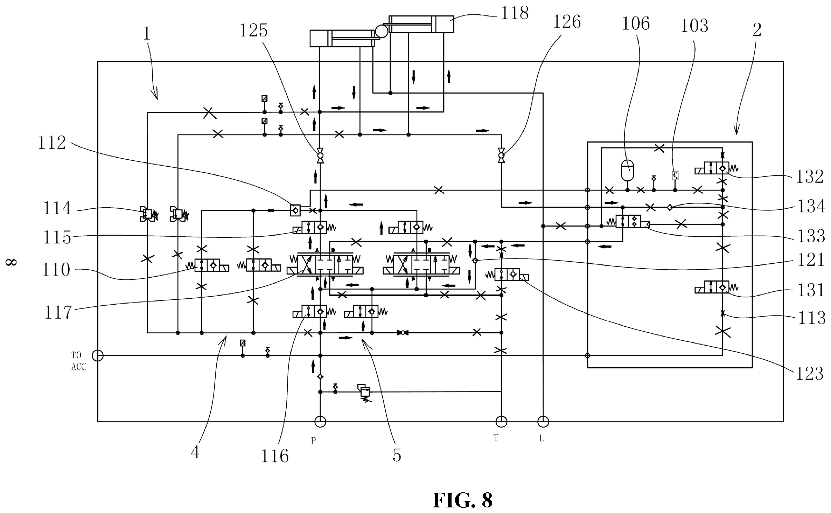

As an example, the emergency feathering oil supply line 4 may be a redundant line that serves as an emergency feathering line and is in communication when emergency feathering is required (as shown in FIG. 5). The normal pitching oil supply and return line 5 may be a usual line for driving the pitch cylinder 118. For example, but not limited to, the normal pitching oil supply and return line 5 may be used as the oil supply and return line for the pitch cylinder 118 under normal-rate feathering condition (as shown in FIG. 6), normal-rate unfeathering condition (as shown in FIG. 7), or variable-rate feathering condition (as shown in FIG. 8).

When the wind turbine has been erected but has not yet started power generation, or when it needs to be shut down for maintenance, it is necessary to maintain the blade angle to enable the wind turbine to resist vortex-induced vibration. Since the system may be in a complete power-off state, it is necessary to comprehensively consider the mutual influence between the pitch angle holding circuit and other functional circuits to prevent the pitch angle holding circuit from affecting the realization of other functions or being affected by the functions of other circuits.

To enhance the safety of the emergency feathering oil supply line 4, a directional valve 112 is connected to the emergency feathering oil supply line 4 and is configured to close the emergency feathering oil supply line 4. When the directional valve 112 is closed, the emergency feathering oil supply line 4 is in a closed state. The directional valve 112 has an oil inlet in communication with the oil source, and an oil outlet in communication with the rodless cavity. The pitch angle holding unit 2 may control the directional valve 112 to close, thereby enabling the pitch angle holding unit 2 to close the emergency feathering oil supply line. For example, but not limited to, the directional valve 112 may be a check valve, a hydraulic-operated directional control valve, or a solenoid directional control valve, which allows hydraulic oil to flow only from the oil source to the rodless cavity.

As an example, the pitch angle holding unit 2 includes an actuation unit 106 that is in communication with the rod cavity, enabling the actuation unit 106 to supply hydraulic oil to the rod cavity and maintain a predetermined pressure in the rod cavity.

Under normal operating conditions of the wind turbine, the emergency feathering oil supply line 4 is closed. When the wind turbine is shut down, the emergency feathering oil supply line 4 is opened.

As an example, the directional valve 112 includes a hydraulic-operated check valve. The hydraulic-operated check valve has an oil inlet in communication with the oil source, and an oil outlet in communication with the rodless cavity. The hydraulic-operated check valve further has an oil control inlet in communication with the actuation unit 106, so that the actuation unit 106 may supply oil to the oil control inlet of the hydraulic-operated check valve, thereby opening or closing the hydraulic-operated check valve. When the pitch angle holding unit 2 is activated, the oil control inlet is in communication to close the directional valve 112, blocking the forward flow path of the hydraulic-operated check valve and thus closing the emergency feathering oil supply line 4, preventing oil supply from the oil source to the rodless cavity.

In this embodiment, the pitch angle holding unit 2 is implemented as a hydraulic-operated check valve by way of example. The pitch angle holding unit 2 closes the emergency feathering oil supply line by controlling the hydraulic-operated check valve to close, but this is not limited thereto. As an example, the hydraulic-operated check valve in this embodiment is a check valve that is hydraulically controlled to close with a pilot ratio greater than 1.5:1.

The technical details of the hydraulic-operated check valve will be described as follows.

As an example, the pilot ratio of the hydraulic-operated check valve in this embodiment is greater than 1.5:1. When the pitch angle holding circuit is activated, the pressure at the oil inlet for forward flow of the hydraulic-operated check valve is equal to the pilot control pressure P of the hydraulic-operated check valve. At the same time, the pressure in the rod cavity of the pitch cylinder 118 is also P. The area ratio of the rodless cavity to the rod cavity of the pitch cylinder 118 is 2:1, so the pressure in the rodless cavity is 0.5P, meaning the pressure on the rear side of the hydraulic-operated check valve is 0.5P. The forward flow passage is opened when the pilot control pressure P is less than the pressure at the oil inlet for forward flow, and the forward flow passage is blocked when the pilot control pressure P is greater than the pressure at the oil inlet for forward flow. When selecting the hydraulic-operated check valve, since the pressure downstream of the valve offsets the pilot control pressure with a ratio of 1:1, the hydraulic-operated check valve may be closed only when the pilot control pressure is greater than the sum of the pressure at the oil inlets for forward flow and the pressure at the oil inlets for forward flow. This is why a pilot ratio greater than 1.5:1 is chosen to close the emergency feathering oil supply line.

If the hydraulic-operated check valve is replaced with a hydraulic-operated directional control valve, the emergency feathering oil supply line may also be closed when the pilot pressure exceeds the spring force of the hydraulic-operated directional control valve.

As an example, the pilot ratio of the hydraulic-operated check valve in this embodiment is 1.8:1, but this is not limited thereto. When the pitch angle holding unit 2 is activated, the actuation unit 106 may supply hydraulic oil to the oil control inlet of the hydraulic-operated check valve, closing the forward flow path of the hydraulic-operated check valve. At this point, the emergency feathering oil supply line 4 is closed by the pitch angle holding unit 2, preventing oil from being supplied through the emergency feathering oil supply line 4 to the rodless cavity.

Before the pitch angle holding unit 2 is activated, the blades are pitched to a predetermined angle by the normal pitching oil supply and return line 5, which is then switched to a closed state with no hydraulic oil flowing in the normal pitching oil supply and return line 5. After the pitch angle holding unit 2 is activated, the actuation unit 106 supplies high-pressure oil to the oil control inlet of the hydraulic-operated check valve, so as to close the forward flow path of the pitch angle holding unit 2. At this point, the emergency feathering oil supply line 4 is closed, preventing the supply of hydraulic oil from the oil source to the rodless cavity through the emergency feathering oil supply line 4. The actuation unit 106 supplies high-pressure oil to the rod cavity, and the oil supply and return line for the rod cavity is closed. Since the normal pitching oil supply and return line 5 is closed, the hydraulic oil cannot enter or exit the rodless cavity as well as the rod cavity through the normal pitching oil supply and return line 5. As a result, the piston rod remains stationary relative to the cylinder body, keeping the blades at the predetermined angle.

When it is necessary to maintain the blades at an optimal anti-vortex pitch angle, the blades may be adjusted to the optimal angle by the pitch cylinder 118, and then the pitch angle holding unit 2 may be used to maintain the pressures in the rod cavity and the rodless cavity of the pitch cylinder 118, keeping the piston rod stationary relative to the cylinder body and thus maintaining the angle of the blades to enable the wind turbine to resist vortex-induced vibration.

In the pitch control unit 1, a first directional control valve 110 is further connected to the emergency feathering oil supply line 4, and is connected in series with the directional valve 112. The first directional control valve 110 is used to control the opening or closing of the emergency feathering oil supply line 4. For example, but not limited to, the first directional control valve 110 is normally closed, while the normal pitching oil supply and return line 5 may be opened to supply oil to the pitch cylinder 118 through the normal pitching oil supply and return line 5, driving the piston rod to extend or retract relative to the cylinder body and thus achieving the pitch adjustment on the blades. The oil inlet of the first directional control valve 110 is in communication with the oil source, and the oil outlet of the first directional control valve 110 is in communication with the oil inlet of the directional valve 112.

For example, the first directional control valve 110 includes a solenoid directional control valve. The solenoid directional control valve is configured to be in the left position when de-energized. At this moment, the first directional control valve 110 is in an opened state. The solenoid directional control valve is further configured to be switched to the right position when energized. At this moment, the first directional control valve 110 is in a closed state. Furthermore, in this embodiment, the first directional control valve 110 is normally in an energized state. Optionally, in this embodiment, the first directional control valve 110 includes, but is not limited to, a two-position, two-way directional control valve.

In this embodiment, the first directional control valve 110 is opened or closed by energizing or de-energizing the first directional control valve 110. During grid-connected operation of the wind turbine, the first directional control valve 110 is in an energized state, so that the emergency feathering oil supply line 4 is in a closed state, and the oil is supplied to or discharged from the rodless cavity of the pitch cylinder through the normal pitching oil supply and return line 5. When the wind turbine is in a shutdown anti-vortex state, the first directional control valve 110 is in a de-energized state and thus is opened, and the opening or closing of the emergency feathering oil supply line 4 is controlled by the directional valve 112.

In this embodiment, when the first directional control valve 110 is de-energized and opened, and the pitch angle holding unit 2 is not activated, the forward flow path of the directional valve 112 is in an opened state, and the emergency feathering oil supply line 4 is in an opened state, thereby supplying oil to the rodless cavity through the emergency feathering oil supply line 4.

Referring to FIG. 5, when the normal pitching oil supply and return line 5 is in a closed state and the pitch angle holding unit 2 is not activated, the first directional control valve 110 is de-energized and opened, and the forward flow path of the directional valve 112 is in an opened state, so that the hydraulic oil in the oil source can enter the rodless cavity through the emergency feathering oil supply line 4. At this time, the hydraulic oil in the rod cavity flows back to the oil source through the oil return line of the rod cavity. The present application is not limited to this embodiment. It can be understood that the oil source in this embodiment may be an oil tank, but is not limited thereto.

Furthermore, to improve the safety of the emergency feathering oil supply line 4, a first ball valve 125 is provided between the oil outlet of the directional valve 112 and the rodless cavity to generally control the opening and closing of the oil supply and return line for the rodless cavity. The first oil port of the first ball valve 125 is in communication with the rodless cavity, and the second oil port of the first ball valve 125 is in communication with the oil outlet of the directional valve 112, which is not limited thereto. The normal pitching oil supply and return line 5 may also be connected to the second oil port of the first ball valve 125, thereby sharing the first ball valve 125 with the emergency feathering oil supply line 4.

Referring to the drawings, a first check valve 134 is provided between the actuation unit 106 and the rod cavity. The oil inlet of the first check valve 134 is in communication with the actuation unit 106, and the oil outlet of the first check valve 134 is in communication with the rod cavity. In this way, the hydraulic oil may be supplied to the rod cavity by the actuation unit 106 to keep a certain pressure in the rod cavity, and may be prevented from flowing from the rod cavity back to the actuation unit 106, thereby improving the operational reliability of the pitch angle holding unit 2.

Furthermore, a second ball valve 126 is provided between the oil outlet of the first check valve 134 and the rod cavity to generally control the opening and closing of the oil supply and return line of the rod cavity and the opening and closing of the oil supply line between the rod cavity and the pitch angle holding unit 2. The first oil port of the second ball valve 126 is in communication with the rod cavity, and the second oil port of the second ball valve 126 is in communication with the oil outlet of the first check valve 134, which is not limited thereto.

Optionally, to improve the operational reliability of the pitch angle holding unit 2, the pitch angle holding unit 2 further includes a pressure sensor 103, which is used to monitor the pressure of the hydraulic oil between the rod cavity and the actuation unit 106, but is not limited thereto. The pressure sensor 103 may be provided between the actuation unit 106 and the oil inlet of the first check valve 134, but is not limited thereto. Optionally, the pressure sensor 103 is provided close to the actuation unit 106, but is not limited thereto.

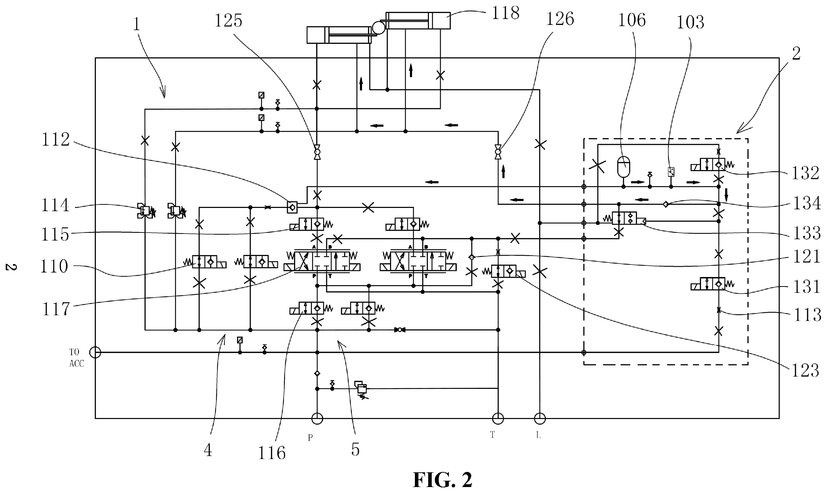

Referring to FIG. 2, when the pitch angle holding unit 2 is activated, the hydraulic oil in the actuation unit 106 flows towards the rod cavity sequentially through the first check valve 134 and the second ball valve 126, and the oil supply pressure of the actuation unit 106 is monitored by the pressure sensor 103.

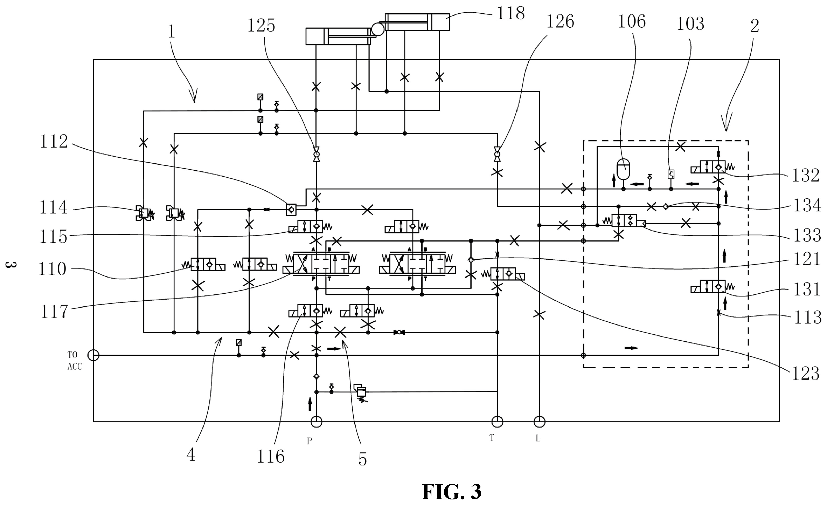

Referring to FIG. 3, furthermore, when the pressure of the actuation unit 106 is less than a predetermined value or when the actuation unit 106 is used for the first time without a predetermined pressure, energy needs to be stored in the actuation unit 106.

In this embodiment, the actuation unit 106 is in communication with an external oil source through an energy storage line, to which a second directional control valve 131 is connected. The oil inlet of the second directional control valve 131 is in communication with the external oil source, and the oil outlet of the second directional control valve 131 is in communication with the actuation unit 106, so that the second directional control valve 131 is opened to activate the energy storage line. Optionally, the second directional control valve 131 includes a solenoid directional control valve. For example, but not limited to, the solenoid directional control valve is a two-position, two-way directional control valve.

When energy needs to be stored in the actuation unit 106, the second directional control valve 131 may be opened, so that the oil in the external oil source can flow into the actuation unit 106, thereby storing energy in the actuation unit 106. When the pressure sensor 103 monitors that the pressure of the actuation unit 106 reaches a predetermined value, the second directional control valve 131 may be closed to end the energy storage process of the actuation unit 106.

To further improve the flow rate and pressure of the hydraulic oil in the energy storage line, a throttle valve 113 is connected to the energy storage line. The first oil port of the throttle valve 113 is in communication with the external oil source, and the second oil port of the throttle valve 113 is in communication with the oil inlet of the second directional control valve 131, but is not limited thereto.

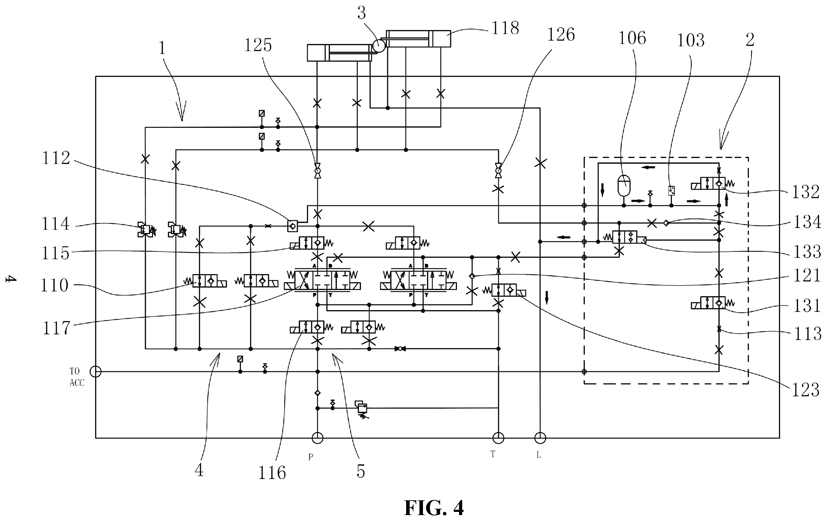

Referring to FIG. 4, to prevent accidental leakage of high-pressure oil from the actuation unit 106 or to avoid potential safety hazards caused from a long-term high pressure in the actuation unit 106, the pressure of the actuation unit 106 needs to be relieved when the pitch angle holding unit 2 is not activated. An energy release line is further provided between the actuation unit 106 and the oil source, and a third directional control valve 132 is connected to the energy release line. The oil inlet of the third directional control valve 132 is in communication with the actuation unit 106, and the oil outlet of the third directional control valve 132 is in communication with the oil source, so that the third directional control valve 132 is opened to activate the energy release line.

In this embodiment, the opening or closing of the energy release line is controlled by opening or closing the third directional control valve 132, so that the pressure of the actuation unit 106 may be relieved as needed. Optionally, the third directional control valve 132 includes a solenoid directional control valve. For example, but not limited to, the solenoid directional control valve is a two-position, two-way directional control valve. Optionally, the third directional control valve 132 is configured to be in an opened state when being energized, at which time the hydraulic oil may return to the oil source through the third directional control valve 132, allowing the actuation unit 106 to release energy.

When the pitch angle holding unit 2 is not activated, the second ball valve 126 may be closed. When the pressure of the actuation unit 106 exceeds a predetermined value, the third directional control valve 132 is opened, so that the hydraulic oil of the actuation unit 106 flows to the oil source through the third directional control valve 132. During this process, the pressure sensor 103 monitors in real time the pressure of the hydraulic oil flowing out of the actuation unit 106. When the pressure value monitored by the pressure sensor 103 reaches the predetermined value, the third directional control valve 132 may be closed to end the energy release process. Optionally, the predetermined value may be zero, but is not limited thereto.

As an example, during the energy release process of the pitch angle holding unit 2, the second ball valve 126 may remain open. When the pressure value of the hydraulic oil supplied by the actuation unit 106 to the seventh directional control valve 133 is less than a predetermined value, the seventh directional control valve 133 is switched to its left position and becomes open. At this time, the hydraulic oil in the rod cavity of the pitch cylinder 118 flows back to the oil tank through the seventh directional control valve 133.

Optionally, in this embodiment, the actuation unit 106 is implemented as an accumulator by way of an example and will be described below, but is not limited to this. Alternatively, the actuation unit 106 may be an oil source with a predetermined pressure, enabling the actuation unit 106 to have the capability to supply high-pressure oil to the rod cavity.

It can be understood that the pitch angle holding unit 2 in this embodiment may be provided with quick connectors. When the pitch system requires the pitch angle holding unit 2, it may be quickly connected, and when the pitch system does not require the pitch angle holding unit 2, it may be quickly removed, which is not limited thereto.

Referring to FIGS. 1 to 8, the pitch control unit 1 further includes a fourth directional control valve 117, which is connected to both the oil supply line of the rod cavity and the normal pitching oil supply and return line of the rodless cavity. The fourth directional control valve 117 includes a first oil supply port, a second oil supply port, an oil inlet, and an oil return port. The oil inlet of the fourth directional control valve 117 is in communication with a pitch drive unit; the oil return port is in communication with the oil source; the first oil supply port is in communication with the rodless cavity; and the second oil supply port is in communication with the rod cavity. By switching the directions of the oil flow into and out of the first and second oil supply ports, the oil may be supplied to the rodless cavity or the rod cavity.

As an example, the fourth directional control valve 117 may be a solenoid directional control valve. For example, but not limited to, the solenoid directional control valve is a three-position four-way directional control valve. When the fourth directional control valve 117 is in a neutral position, it is in a closed state, so that the hydraulic oil cannot pass through the fourth directional control valve 117.

Under normal pitching conditions of the wind turbine, the first directional control valve 110 is energized and closed, thereby closing the emergency feathering oil supply line 4; and the normal pitching oil supply and return line 5 is in an opened state, allowing the hydraulic oil to enter or exit the rodless cavity through the normal pitching oil supply and return line 5, and thus enabling the extension or retraction of the piston rod to perform the pitch adjustment on the blades. Furthermore, the normal pitching oil supply and return line 5 includes a second oil supply line for the rodless cavity, which is different from the emergency feathering oil supply line 4.

Referring to FIG. 6, when the fourth directional control valve 117 is opened at the right position, the oil inlet P of the fourth directional control valve 117 is in communication with the oil source, and the first oil supply port A is in communication with the rodless cavity, and the second oil supply port B is in a closed state. At this time, the second oil supply line for the rodless cavity is opened. The hydraulic oil in the oil source can enter the fourth directional control valve 117 through its oil inlet P and flow to the rodless cavity through the first oil supply port A. Meanwhile, the hydraulic oil in the rod cavity is discharged to the oil source through the second ball valve 126. In this way, during the flow of the hydraulic oil, the piston rod extends relative to the cylinder body, thereby pitching the blades to run.

To improve the reliability of the second oil supply line, a fifth directional control valve 116 is arranged between the oil inlet of the fourth directional control valve 117 and the oil source. The first oil port of the fifth directional control valve 116 is in communication with the oil source, and the second oil port thereof is in communication with the oil inlet of the fourth directional control valve 117. A sixth directional control valve 115 is further arranged between the first oil supply port and the rodless cavity. The first oil port of the sixth directional control valve 115 is in communication with the first oil supply port, and the second oil port thereof is in communication with the rodless cavity.

In this embodiment, the fifth directional control valve 116 may be a solenoid directional control valve, which is, for example, but not limited to, a two-position two-way directional control valve. The fifth directional control valve 116 is configured to be opened when energized, but is not limited thereto. Optionally, the sixth directional control valve 115 may be a solenoid directional control valve, which is, for example, but not limited to, a two-position two-way directional control valve. The sixth directional control valve 115 is configured to be opened when energized, but is not limited thereto.

Referring to FIG. 6, in this embodiment, the first oil port of the sixth directional control valve 115 is in communication with the first oil supply port A, and the second oil port thereof is in communication with the second oil port of the first ball valve 125. When the fifth directional control valve 116, the fourth directional control valve 117 and the sixth directional control valve 115 are energized and opened, and when the first ball valve 125 is opened, the hydraulic oil in the oil source is supplied to the rodless cavity. The hydraulic oil flows in the following path: oil source → fifth directional control valve 116 → oil inlet P of the fourth directional control valve 117 → first oil supply port A of the fourth directional control valve 117 → sixth directional control valve 115 → first ball valve 125 → rodless cavity, thereby supplying the hydraulic oil to the rodless cavity.

The rod cavity is in communication with the oil source through a second oil supply and return line, to which a seventh directional control valve 133 is connected. The first oil port of the seventh directional control valve 133 is in communication with the rod cavity, and the second oil port of the seventh directional control valve 133 is in communication with the oil source. As an example, the seventh directional control valve 133 is connected between the second ball valve 126 and the oil source. The first oil port of the seventh directional control valve 133 is in communication with the second oil port of the second ball valve 126, and the first oil port of the seventh directional control valve 133 is also in communication with the oil outlet of the first check valve 134. The seventh directional control valve 133 is in communication with the oil source.

In this embodiment, the second oil supply and return line includes a first oil return line between the rod cavity and the oil source. A first oil return line is arranged between the second oil port of the seventh directional control valve 133 and the oil source and configured to allow oil to flow from the rod cavity to the oil source. An eighth directional control valve 123 is connected to the first oil return line. The first oil port of the eighth directional control valve 123 is in communication with the second oil port of the seventh directional control valve 133, and the second oil port thereof is in communication with the oil source, so that the eighth directional control valve 123 is opened to activate the first oil return line.

As an example, the seventh directional control valve 133 is a hydraulic-operated directional control valve, which is, for example, but not limited to, a two-position two-way directional control valve. The seventh directional control valve 133 is configured to be opened in the left position, allowing the hydraulic oil to flow to the rod cavity through the seventh directional control valve 133 or to flow back to the oil source through the seventh directional control valve 133, which is not limited thereto.

The eighth directional control valve 123 is a solenoid directional control valve, which is, for example, but not limited to, a two-position two-way directional control valve. The eighth directional control valve 123 is configured to be opened in the left position, allowing the hydraulic oil to flow back to the oil source through the eighth directional control valve 123.

Referring to FIG. 6, when both the second ball valve 126 and the seventh directional control valve 133 are opened, the first oil return line of the rod cavity is opened. At this time, the hydraulic oil in the rod cavity flows in the following path: rod cavity → second ball valve 126 → seventh directional control valve 133 → eighth directional control valve 123 → oil source, thereby discharging the hydraulic oil from the rod cavity to the oil source.

Referring to FIG. 7, further, the second oil port of the seventh directional control valve 133 is in communication with the second oil supply port B through a second oil supply line to supply the hydraulic oil to the rod cavity.

When the fourth directional control valve 117 is opened in the left position, the oil inlet P of the fourth directional control valve 117 is in communication with the second oil supply port B, and the first oil supply port A is in communication with the oil outlet T. The hydraulic oil in the oil source can enter the fourth directional control valve 117 through its oil inlet P and exit the fourth directional control valve 117 through the second oil supply port B. At this time, the flow process of the hydraulic oil is as follows: oil source → fifth directional control valve 116 → oil inlet P of the fourth directional control valve 117 → second oil supply port B of the fourth directional control valve 117 → seventh directional control valve 133 → second ball valve 126 → rod cavity, thereby delivering the hydraulic oil from the oil source into the rod cavity. Meanwhile, the hydraulic oil in the rodless cavity is discharged back to the oil source in the flow path: rodless cavity → first ball valve 125 → sixth directional control valve 115 → first oil supply port A → oil outlet T → oil source.

Referring to FIG. 8, a differential line is arranged between the oil inlet of the fourth directional control valve 117 and the second oil port of the seventh directional control valve 133. The differential line is provided thereon with a second check valve 121. The oil inlet of the second check valve 121 is in communication with the second oil port of the seventh directional control valve 133, and the oil outlet of the second check valve 121 is in communication with the oil inlet P of the fourth directional control valve 117.

Similar to the embodiment in FIG. 6, when the fourth directional control valve 117 is opened in the right position, and when the fifth directional control valve 116, the fourth directional control valve 117 and the sixth directional control valve 115 are energized and opened, and when the first ball valve 125 is opened, the hydraulic oil in the oil source is delivered to the rodless cavity. The hydraulic oil flows as follows: oil source → fifth directional control valve 116 → oil inlet P → first oil supply port A → sixth directional control valve 115 → first ball valve 125 → rodless cavity, thereby delivering the hydraulic oil into the rodless cavity.

Meanwhile, the eighth directional control valve 123 is de-energized and closed, and the hydraulic oil in the rod cavity is delivered back to the oil source. The hydraulic oil flows as follows: rod cavity → second ball valve 126 → seventh directional control valve 133 → eighth directional control valve 123 → oil inlet P → first oil supply port A → sixth directional control valve 115 → first ball valve 125 → rodless cavity. That is, the hydraulic oil flowing out of the rod cavity enters the fourth directional control valve 117 and is then delivered into the rodless cavity.

It can be understood that the second oil port of the seventh directional control valve 133 is in communication with the second oil supply port B, the first oil port of the eighth directional control valve 123, and the oil inlet P of the fourth directional control valve 117, but it is not limited thereto.

Referring to the drawings, a second oil return line for returning oil from the rodless cavity is arranged between the rodless cavity and the oil source, and a relief valve 114 is connected to the second oil return line. The oil inlet of the relief valve 114 is in communication with the rodless cavity, and the oil outlet of the relief valve 114 is in communication with the oil source. In this embodiment, the relief valve 114 provides overload protection for the pitch system. The relief valve 114 can effectively protect the pitch system from exceeding its maximum load capacity during the process of anti-vortex vibration, achieving effective overload protection and improving the operational safety of the pitch system.

In another aspect of the present application, a wind turbine is provided, which includes the pitch system described above.

The pitch system provided according to the present application includes a pitch angle holding unit 2, which mainly maintains the pressure in the rod cavity and the rodless cavity of the pitch cylinder 118 to keep the piston rod stationary relative to the cylinder body, thereby maintaining the angular position of the blades and enabling the wind turbine to resist vortex-induced vibration.

FIG. 2 shows a schematic diagram of the on-off state of the hydraulic circuit under anti-vortex conditions. Under anti-vortex conditions, the actuation unit 106 in the pitch angle holding circuit can use its own stored energy to control the directional valve 112 to close and close the oil return line of the rod cavity, thereby maintaining the pressure in the rod cavity and the rodless cavity of the pitch cylinder 118, keeping the piston rod stationary relative to the cylinder body, and maintaining the blades at the anti-vortex angle position.

Under different external wind conditions, the anti-vortex angle of the blades may be varied. If a mechanical locking pin is used to lock the blades, the blades cannot be locked at the optimal anti-vortex angle. However, according to the embodiment of the present application, the blades may be driven by the pitch cylinder 118 to the ideal anti-vortex angle, and then locked at this angle by the pitch angle holding unit 2, thereby achieving better anti-vortex vibration effects.

The actuation unit 106 may be an accumulator. Before performing anti-vortex operations, energy may be stored in the accumulator, for example, by filling it with hydraulic oil at a predetermined pressure. After the wind turbine is mounted and before it is connected to the grid for power generation, the ground power supply may be used to drive the pitch control unit 1 to operate the pitch cylinder 118 which pitches the blades to the anti-vortex angle, and the energy storage operation may be performed on the accumulator which may be used to maintain the hydraulic pressure of the system, and the external power supply may be disconnected. During the operation of the wind turbine, if a fault occurs, a shutdown is required for maintenance. Before the shutdown, the power supply of the wind turbine may be used to drive the pitch control unit 1 to operate the pitch cylinder 118 which pitches the blades to the anti-vortex angle, and the energy storage operation may be performed on the accumulator which may be used to maintain the hydraulic pressure of the system, and the system may be shut down and de-energized.

Referring to FIG. 4, when the pitch angle holding unit 2 releases energy, the third directional control valve 132 is energized and switched to the left position to be opened. The directional valve 112 loses the pilot control signal, and the hydraulic oil in the actuation unit 106 of the pitch control unit 1 flows back to the oil tank to release the hydraulic energy. The hydraulic oil flow path of the pitch angle holding unit 2 during the energy release process is: actuation unit 106 → third directional control valve 132 → oil tank. In this embodiment, the pitch control unit 1 may stop supplying oil to the pitch cylinder 118 to maintain the pitch angle of the blades (as shown). In addition, the pitch control unit 1 may supply oil to the pitch cylinder 118 for normal pitch adjustment or variable-rate feathering (not shown). It can be understood that, when the pitch angle holding unit 2 is not activated or is in the process of releasing energy, the pitch angle holding unit 2 does not affect the operating conditions of the pitch control unit 1.

Referring to FIG. 5, the first directional control valve 110 is de-energized and opened. The hydraulic oil in the oil source is delivered to the rodless cavity through the emergency feathering oil supply line 4. The second ball valve 126, the seventh directional control valve 133, and the eighth directional control valve 123 are all opened. At this time, the hydraulic oil for the rodless cavity flows in the following path: oil source → first directional control valve 110 → directional valve 112 → first ball valve 125 → rodless cavity. Meanwhile, the hydraulic oil in the rod cavity returns to the oil source in the flow path: rod cavity → second ball valve 126 → seventh directional control valve 133 → eighth directional control valve 123 → oil source. This embodiment may be applied to emergency feathering conditions, but is not limited thereto.

Referring to FIG. 6, hydraulic oil in the oil source is delivered to the rodless cavity in the flow path: oil source → fifth directional control valve 116 → oil inlet P of fourth directional control valve 117 → first oil supply port A of fourth directional control valve 117 → sixth directional control valve 115 → first ball valve 125 → rodless cavity, thereby delivering the hydraulic oil into the rodless cavity. When the second ball valve 126, the seventh directional control valve 133, and the eighth directional control valve 123 are all in the opened state, the first oil return line of the rod cavity is opened. In this case, the hydraulic oil in the rod cavity flows as follows: rod cavity → second ball valve 126 → seventh directional control valve 133 → eighth directional control valve 123 → oil source, thereby delivering the hydraulic oil from the rod cavity to the oil source. This embodiment may be applied to the normal-rate feathering condition of the pitch system, but is not limited thereto.

Referring to FIG. 7, the hydraulic oil flows as follows: oil source → fifth directional control valve 116 → oil inlet P of fourth directional control valve 117 → second oil supply port B of fourth directional control valve 117 → seventh directional control valve 133 → second ball valve 126 → rod cavity, thereby delivering the hydraulic oil from the oil source into the rod cavity. At the same time, the hydraulic oil in the rodless cavity returns to the oil source in the flow path: rodless cavity → first ball valve 125 → sixth directional control valve 115 → first oil supply port A → oil outlet T → oil source. This embodiment may be applied to the normal-rate unfeathering condition of the pitch system.

Referring to FIG. 8, the hydraulic oil in the oil source is delivered to the rodless cavity in the flow path: oil source → fifth directional control valve 116 → oil inlet P → first oil supply port A → sixth directional control valve 115 → first ball valve 125 → rodless cavity, thereby delivering the hydraulic oil into the rodless cavity. In addition, the hydraulic oil flows in another flow path: rod cavity → second ball valve 126 → seventh directional control valve 133 → eighth directional control valve 123 → oil inlet P → first oil supply port A → sixth directional control valve 115 → first ball valve 125 → rodless cavity. That is, the hydraulic oil flowing out from the rod cavity enters the fourth directional control valve 117 and is then delivered into the rodless cavity. In this way, the hydraulic oil flowing out from the rod cavity is mixed with the high-pressure oil in the rodless cavity and is then delivered to the rodless cavity. The differential connection of the hydraulic circuit improves the extension speed of the piston rod of the pitch cylinder 118, thereby achieving variable adjustment of the feathering speed. According to the pitching requirements of the wind turbine, the pitching rate control of the wind turbine is achieved. The feathering speed and the feathering efficiency of the wind turbine are improved while ensuring safety. This embodiment may be applied to the variable-rate feathering condition, but is not limited thereto.

In the pitch angle holding circuit, the actuation unit 106 continuously maintains the pressure in the directional valve 112, the seventh directional control valve 133, and the rod cavity of the pitch cylinder, which can maintain the blade angle position of the wind turbine during long-term vortex resistance.

In this embodiment, the pitch angle holding unit 2 features a modular design. The pitch angle holding unit 2 is used as a separate component, which may be mounted when the pitch system has a vortex resistance requirement and may be removed and replaced with an oil circuit communicating block when there is no vortex resistance requirement, achieving cost savings.

The pitch system provided according to the present application may achieve the switching between the vortex resistance function and the pitching function of the wind turbine without affecting the normal pitching operation and emergency feathering operation of the wind turbine.

When the wind turbine has been mounted but has not yet started generating electricity, or when maintenance is required and the wind turbine needs to be shut down, it is necessary to maintain the blade pitch angle to enable the wind turbine to resist vortex-induced vibration. Since the pitch system may be completely de-energized, it is necessary to comprehensively consider the mutual influence between the pitch angle holding circuit (for example, but not limited to, the oil supply and return line between the pitch angle holding unit and the pitch cylinder) and other functional circuits (for example, but not limited to, the oil supply and return line of the pitch control unit 1) so as to avoid the pitch angle holding circuit from affecting the realization of other functions or being affected by other circuit functions.

Here, the relationships between the pitch angle holding circuit and the normal pitching/variable-rate feathering circuit and between the pitch angle holding circuit and the emergency feathering circuit are mainly considered.

Regarding the relationship between the pitch angle holding circuit and the normal pitching/variable-rate feathering circuit, during the normal pitching/variable-rate feathering operation, the vortex resistance action of the pitch angle holding circuit in the pitch system shall be ensured to stop. For example, but not limited to, the seventh directional control valve 133 is in the opened state, and the third directional control valve 132 is normally energized to be in the opened state, so that the oil in the pitch angle holding circuit is always discharged back to the oil tank for pressure relief during the normal pitching operation.

Regarding the relationship between the pitch angle holding circuit and the emergency feathering circuit, when the pitch system is in the vortex resistance condition, the high pressure in the accumulator shall not be transmitted to the rodless cavity of the pitch cylinder 118 through the emergency feathering oil supply line. Therefore, for the pitch angle holding circuit, it is necessary to consider using the directional valve 112 to close the emergency feathering oil supply line 4 when implementing the vortex resistance function.

In this embodiment, the pressure in the pitch cylinder 118 is maintained by communicating the emergency feathering oil supply line 4 with the rodless cavity, deliverying the hydraulic oil to the rod cavity by the pitch angle holding unit 2, and closing the emergency feathering oil supply line 4 for the rodless cavity by the pitch angle holding unit 2, which is provided as an example without limitation. Based on the requirements, the emergency feathering oil supply line may be in communication with the rod cavity (not shown), and the pitch angle holding unit 2 may be configured to deliver the hydraulic oil to the rodless cavity and close the emergency feathering oil supply line for the rod cavity, thereby achieving pressure maintenance of the pitch cylinder 118, which is also within the protection scope of the present application. Based on the requirements, in this case, the safety protection pressure of the relief valve 114 on the overload protection line may be adjusted accordingly. For implementation in this case, references may be made to the above example where the pitch angle holding unit is in communication with the rodless cavity, and no detailed description is provided here.

Compared with the case where the pitch angle holding unit 2 is connected to the rod cavity of the pitch cylinder 118, when the pitch angle holding unit 2 is connected to the rodless cavity of the pitch cylinder 118, the entire pitch system has a lower safety pressure threshold and better safety.

It should be noted that in FIGS. 1 to 8 provided in the present application, the port P at the outer frame boundary of each figure represents the oil supply port of the pitch system; the port T represents the oil return port of the pitch system; ACC represents the oil supply port of the external oil source; and L represents the oil drain port of the pitch system.

According to another aspect of the present application, a wind farm is further provided, which includes the wind turbine provided with any of the aforementioned pitch systems.

The pitch system and the wind turbine are provided according to the present application. The pitch system includes a pitch cylinder, a pitch control unit, and a pitch angle holding unit. When the pitch angle holding unit is activated, it can provide hydraulic oil to the rod cavity and close the oil supply and return line of the rodless cavity to prevent hydraulic oil from entering and exiting the rodless cavity. This ensures that no hydraulic oil enters or exits both the rod cavity and the rodless cavity of the pitch cylinder, achieving pressure maintenance in both the rod cavity and the rodless cavity. As a result, the piston rod remains at a predetermined position relative to the cylinder body, preventing a pitching rotation of the blades.

In the description of the present application, it should be understood that the orientation or position relationship indicated by the terms "center", "upper", "lower", "front", "rear", "left", "right", "vertical", "horizontal", "top", "bottom", "inner", "outer", or the like is based on the orientation or position relationship shown in the drawings, and only for the purpose of facilitating describing the present application and simplifying the description, rather than indicating or implying that the device or element referred to must have a specific orientation, which is constructed and operated in a specific orientation, and therefore cannot be understood as a limitation to the present application.

In addition, the terms "first", "second" and the like are only used for purpose of description, and should not be interpreted as indicating or implying relative importance or implying the number of the indicated technical features. Therefore, a feature defined with "first" or "second" may explicitly or implicitly include one or more such feature. In addition, in the description of the present application, "multiple or a plurality of" means two or more than two unless otherwise stated.

In the description of the present application, unless otherwise specified and limited, terms "mounting", "linkage", "connection", and "fixation" should be broadly interpreted. For example, the "connection" may indicate a fixed connection, a removable connection, or an integral connection; may indicate a mechanical connection or an electrical connection or a connection in communication; may indicate a direct connection or an indirect connection via an intermediate medium; and may indicate an internal communication between two components or an interaction between two components. For those skilled in the art, the specific meaning of the above terms in the present application may be understood in the light of specific circumstances.

In addition, the described characteristics, structures, or features according to the present application may be combined in one or more embodiments in any appropriate manner. In the above descriptions, a lot of specific details are provided to give a comprehensive understanding of the embodiments of the present application. However, a person of ordinary skill in the art is to be aware that, the technical solutions in the present application may be implemented without one or more of the particular details, or another method, component, or material may be used. In other cases, well-known structures, materials, or operations are not shown or described in detail, in order not to obscure the aspects of the present application.

## Claims

1. A pitch system, comprising:
a pitch cylinder (118) provided with a rod cavity, a rodless cavity, and a piston rod;
a pitch control unit (1) arranged between an oil source and the pitch cylinder (118), wherein the pitch control unit (1) is in communication with both the rod cavity and the rodless cavity, so as to extend or retract the piston rod of the pitch cylinder (118) for blade pitch adjustment by switching directions of oil flow into and out of the rod cavity and the rodless cavity; and
a pitch angle holding unit (2) connected between the oil source and one of the rod cavity and the rodless cavity, wherein the pitch angle holding unit is configured to supply oil to the one of the rod cavity and the rodless cavity and close an oil supply and return line of the other one of the rod cavity and the rodless cavity, such as to keep the piston rod stationary, thereby maintaining blades at a predetermined pitch angle.

2. The pitch system according to claim 1, wherein the oil supply and return line comprises an emergency feathering oil supply line (4) and a normal pitching oil supply and return line (5) connected in parallel between the rodless cavity and the oil source;
the normal pitching oil supply and return line (5) is configured to close when the pitch angle holding unit is activated, and the pitch angle holding unit is configured to close the emergency feathering oil supply line (4) when the pitch angle holding unit is activated.

3. The pitch system according to claim 2, wherein a directional valve (112) is connected to the emergency feathering oil supply line (4) and is configured to close the emergency feathering oil supply line (4) when the directional valve (112) is in a closed state.

4. The pitch system according to claim 3, wherein the pitch angle holding unit comprises an actuation unit (106) in communication with the rod cavity;
the directional valve (112) comprises a hydraulic-operated check valve, which has an oil control inlet in communication with the actuation unit (106), an oil inlet in communication with the oil source, and an oil outlet in communication with the rodless cavity; and
the directional valve (112) is configured to close when the pitch angle holding unit is activated and the oil control inlet is opened, thereby enabling the pitch angle holding unit (2) to close the directional valve (112).

5. The pitch system according to claim 3, wherein the directional valve (112) comprises a hydraulic-operated directional control valve, a hydraulic-operated check valve, or a solenoid directional control valve.

6. The pitch system according to claim 3, wherein a first directional control valve (110) is further connected to the emergency feathering oil supply line (4), and has an oil inlet in communication with the oil source, and an oil outlet in communication with an oil inlet of the directional valve (112).

7. The pitch system according to claim 4, wherein a pilot ratio of the hydraulic-operated check valve is greater than 1.5:1; and/or,
a first check valve (134) is provided between the actuation unit (106) and the rod cavity, and has an oil inlet in communication with the actuation unit (106), and an oil outlet in communication with the rod cavity; and/or,
an energy storage line is provided to communicate the actuation unit (106) with an external oil source, a second directional control valve (131) is connected to the energy storage line, and has an oil inlet in communication with the external oil source, and an oil outlet in communication with the actuation unit (106), and the second directional control valve (131) is configured to open so as to activate the energy storage line; and/or,
an energy release line is arranged between the actuation unit (106) and the oil source, and a third directional control valve (132) is connected to the energy release line, and has an oil inlet in communication with the actuation unit (106), and an oil outlet in communication with the oil source, and the third directional control valve (132) is configured to open so as to activate the energy release line.

8. The pitch system according to claim 2, wherein the pitch control unit (1) comprises a fourth directional control valve (117), which is connected to both the oil supply line for the rod cavity and the normal pitching oil supply and return line for the rodless cavity,
the fourth directional control valve (117) comprises a first oil supply port, a second oil supply port, an oil inlet, and an oil return port,
the oil inlet of the fourth directional control valve (117) is in communication with a pitch drive unit, the oil return port is in communication with the oil source, the first oil supply port is in communication with the rodless cavity, the second oil supply port is in communication with the rod cavity, and
the fourth directional control valve (117) is configured to supply oil to the rodless cavity or the rod cavity by switching directions of oil flow into and out of the first oil supply port and the second oil supply port.

9. The pitch system according to claim 8, wherein a fifth directional control valve (116) is arranged between the oil inlet of the fourth directional control valve (117) and the oil source, and has a first oil port in communication with the oil source, and a second oil port in communication with the oil inlet of the fourth directional control valve (117); and/or,
a sixth directional control valve (115) is arranged between the first oil supply port and the rodless cavity, and has a first oil port in communication with the first oil supply port, and a second oil port in communication with the rodless cavity; and/or,
a seventh directional control valve (133) is arranged between the second oil supply port and the rod cavity, and has a first oil port in communication with the rod cavity, and a second oil port in communication with the second oil supply port, and the seventh directional control valve (133) is configured to be in a closed state when the pitch angle holding unit is activated; and/or,
a second oil return line for returning oil from the rodless cavity is arranged between the rodless cavity and the oil source, a relief valve (114) is connected to the second oil return line, and has an oil inlet in communication with the rodless cavity, and an oil outlet in communication with the oil source.

10. A wind turbine, comprising the pitch system according to any one of claims 1 to 9.

11. A wind farm, comprising the wind turbine according to claim 10.
